(19)

Europäisches Patentamt
European Patent Office
Office européen des brevets

(11) **EP 3 438 219 A1**

(12) **EUROPEAN PATENT APPLICATION**
published in accordance with Art. 153(4) EPC

(43) Date of publication:
**06.02.2019 Bulletin 2019/06**

(21) Application number: **17774698.9**

(22) Date of filing: **23.03.2017**

(51) Int Cl.:
*C09D 133/00* (2006.01)     *B29C 41/20* (2006.01)
*B32B 27/30* (2006.01)     *C08J 7/04* (2006.01)
*C09D 7/12* (2019.02)

(86) International application number:
**PCT/JP2017/011812**

(87) International publication number:
**WO 2017/170160 (05.10.2017 Gazette 2017/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **30.03.2016 JP 2016068956**

(71) Applicant: **Zeon Corporation
Tokyo 100-8246 (JP)**

(72) Inventor: **IWABUCHI Satoshi
Tokyo 100-8246 (JP)**

(74) Representative: **Maiwald Patent- und
Rechtsanwaltsgesellschaft mbH
Elisenhof
Elisenstraße 3
80335 München (DE)**

(54) **SPRAY COATING SOL, VINYL CHLORIDE RESIN MOLDED BODY WITH SPRAY COATING
LAYER, MANUFACTURING METHOD FOR SAID MOLDED BODY, AND LAMINATE**

(57)     Provided is a spray coating sol having excellent sol dispersibility, fluidity, and thermal stability. The spray coating sol of the disclosure for forming a spray coating layer of an automobile interior material contains acrylic-based fine particles and a plasticizer, and the plasticizer contains at least one selected from the group consisting of a benzoate-based plasticizer, a phthalate-based plasticizer, and a laurate-based plasticizer.

EP 3 438 219 A1

**Description**

TECHNICAL FIELD

The present disclosure relates to a spray coating sol, a vinyl chloride resin molded product having a spray coating layer and a method for manufacturing the same, and a laminate that can be used in manufacturing of automobile interior materials.

BACKGROUND

In recent years, two-color molded products each having a desired colored thin film on the surface have been proposed as molded products serving as automobile interior materials that can be used in manufacturing of automobile interior parts having high design quality, such as automobile instrument panels and door trims. The thin film constituting the surface portion of such a two-color molded product and the composition for forming the thin film are required to have various performances.

Here, in the manufacturing of an automobile interior material constituting an automobile interior part, such as an automobile instrument panel, for example, a powder slush molding method, which can form a molded product by powdering a resin powder over a heated mold and melting the resin powder to reproduce the shape and surface pattern of the mold, has been widely employed. For example, in PTL 1, prior to the heating of a mold to be used in such a powder slush molding method, a composition containing a vinyl chloride-based resin is sprayed onto the mold to previously form a coating layer. In addition, in PTL 1, a sheet material serving as a substrate is formed on the mold provided with the coating layer by powder slush molding to manufacture a two-color-molded sheet material. As a result, in the two-color-molded sheet material of PTL 1, a thin and uniform coating layer having a thickness of 30 $\mu$m or less is formed on a sheet material with good close adherence.

More specifically, in the technology described in PTL 1, as a spray composition for forming a coating layer, 5 parts by weight of a plasticizer, 10 parts by weight of a curing agent, and 2 to 4 parts by weight of a heat stabilizer are used based on 100 parts by weight of an N-maleimide graft polymerized vinyl chloride resin. In addition, in the technology described in PTL 1, an epoxy resin is used as the powder slush molding composition for forming the sheet material.

CITATION LIST

Patent Literature

PTL 1: JP4912507B

SUMMARY

(Technical Problem)

Here, for example, in the manufacturing of a two-color molded product using the powder slush molding method, generally, the temperature of the mold to be used is increased to 200°C or more, and a resin powder constituting a substrate is then processed. Accordingly, a spray composition to be previously applied to the mold is required to have excellent thermal stability not causing coloring and so on even when the composition is exposed to high temperature in a later step. In addition, the spray composition is required to have good fluidity so that it can be precisely sprayed even in, for example, precise texture applied to the mold without causing dripping. Furthermore, the spray composition is also required to have good sol dispersibility that allows formation of a coating layer which is uniform and has excellent design quality.

However, in the conventional technology described in PTL 1, the sol dispersibility, fluidity, and thermal stability of the spray composition itself used in formation of the coating layer of the two-color-molded sheet material are not investigated and need to be further improved.

Accordingly, it is an object of the disclosure to provide a spray coating sol having excellent sol dispersibility, fluidity, and thermal stability that can be used in formation of a spray coating layer of an automobile interior material.

In addition, it is an object of the disclosure to provide a vinyl chloride resin molded product having a spray coating layer in which the spray coating layer is formed using the spray coating sol and to provide a laminate including the vinyl chloride resin molded product having a spray coating layer.

(Solution to Problem)

The present inventor has intensively studied for the purpose of solving the above problems. The present inventor has then found that a spray coating sol obtained by using acrylic-based fine particles and a prescribed type of plasticizer has excellent sol dispersibility, fluidity, and thermal stability and therefore can be satisfactorily used for forming a spray coating layer of an automobile interior material, and the disclosure has been accomplished.

That is, it is an object of this disclosure to advantageously solve the above problems, and the spray coating sol of the disclosure is a spray coating sol for forming a spray coating layer of an automobile interior material and is characterized by containing acrylic-based fine particles (A) and a plasticizer (B), wherein the plasticizer (B) contains at least one selected from the group consisting of a benzoate-based plasticizer, a phthalate-based plasticizer, and a laurate-based plasticizer. The use of acrylic-based fine particles (A) and a prescribed plasticizer (B) for preparation of a spray coating sol as described above can cause the resulting spray coating sol to show excellent sol dispersibility, fluidity, and thermal stability. As a result, in the case of spray coating of the spray coating sol of the disclosure, for example, a uniform spray coating layer can be formed while coloring, irregular color, and so on are suppressed. That is, a spray coating layer having excellent design quality can be obtained.

Here, the spray coating sol of the disclosure preferably has a viscosity of 2000 mPa·s or more and 50000 mPa·s or less. This is because if the viscosity is not lower than the above lower limit, the spray coating sol can be more favorably sprayed while occurrence of dripping is further suppressed. In addition, the above is because if the viscosity is not higher than the above upper limit, the spray coating sol can be provided with higher fluidity, and the sol can be precisely sprayed, for example, even when a fine surface pattern is applied to a coating object such as a mold. In addition, as a result, the design quality of an automobile interior material including a spray coating layer obtained by coating of the spray coating sol is further improved.

In the disclosure, the "viscosity" can be measured with a viscometer under an environment of a temperature of 23°C at a rotation speed of 6 rpm.

The spray coating sol of the disclosure preferably further contains a solvent (C), and the solvent (C) preferably has a boiling point at 1 atm of 200°C or more. This is because if the solvent (C) having a boiling point not lower than the above lower limit is further used in preparation of the spray coating sol, the design quality of a spray coating layer and an automobile interior material including the spray coating layer can be prevented from being deteriorated by generation of bubbles and so on from the applied sol, for example, when the coating object to which the spray coating sol is applied is heated. In addition, a vinyl chloride resin molded product having a spray coating layer or the like can be formed more safely and at low cost.

In the spray coating sol of the disclosure, the acrylic-based fine particles (A) preferably have an average particle diameter of 30 $\mu$m or less. This is because if the average particle diameter of the acrylic-based fine particles (A) is not higher than the above upper limit, the sol dispersibility of the spray coating sol and the surface smoothness after coating can be further improved.

In the disclosure, the "average particle diameter" can be measured as a volume-average particle diameter by a laser diffraction method in accordance with JIS Z8825.

In addition, it is an object of this disclosure to advantageously solve the above problems, and the vinyl chloride resin molded product having a spray coating layer of the disclosure is characterized by including a vinyl chloride resin molded product prepared by forming a vinyl chloride resin composition and a spray coating layer formed using any of the above-described spray coating sols on the vinyl chloride resin molded product. Thus, in a vinyl chloride resin molded product having a spray coating layer including the above-described spray coating layer and vinyl chloride resin molded product, irregular color and coloring of the spray coating layer present on the surface are suppressed, and a two-color molded product as an automobile interior material having good design quality can be obtained.

Furthermore, it is an object of this disclosure to advantageously solve the above problems, and the laminate of the disclosure is characterized by including a foamed polyurethane molded product and the above-described vinyl chloride resin molded product having a spray coating layer in which the vinyl chloride resin molded product of the vinyl chloride resin molded product having a spray coating layer is formed on the foamed polyurethane molded product. A laminate formed using a foamed polyurethane molded product and the above-described vinyl chloride resin molded product having a spray coating layer can be used in, for example, an automobile interior material constituting an automobile interior part, such as an automobile instrument panel, having excellent design quality.

In addition, it is an object of this disclosure to advantageously solve the above problems, and the method for manufacturing a vinyl chloride resin molded product having a spray coating layer of the disclosure is characterized by including step (a) of forming a spray coating layer using any of the above-described spray coating sols and step (b) of forming a vinyl chloride resin molded product using a vinyl chloride resin composition such that the spray coating layer and the vinyl chloride resin molded product are in contact with each other. When a vinyl chloride resin molded product having a spray coating layer is manufactured through steps (a) and (b), irregular color and coloring of the spray coating layer present on the surface are suppressed, and a two-color molded product as an automobile interior material having good design quality can be obtained.

(Advantageous Effect)

According to the disclosure, it is possible to provide a spray coating sol having excellent sol dispersibility, fluidity, and thermal stability that can be used in formation of a spray coating layer of an automobile interior material.

In addition, according to the disclosure, it is possible to provide a vinyl chloride resin molded product having a spray coating layer in which the spray coating layer is formed using the spray coating sol and a method for manufacturing the same, and a laminate including the vinyl chloride resin molded product having a spray coating layer.

DETAILED DESCRIPTION

Embodiments of the disclosure will now be described in detail.

The spray coating sol of the disclosure can be used in, for example, forming a vinyl chloride resin molded product having a spray coating layer of the disclosure. In addition, the vinyl chloride resin molded product having a spray coating layer formed using the spray coating sol of the disclosure can be used in, for example, manufacturing of the laminate of the disclosure including the vinyl chloride resin molded product having a spray coating layer.

The vinyl chloride resin molded product having a spray coating layer of the disclosure can be suitably used as, for example, an automobile interior material, such as a surface skin of an automobile interior part, e.g., an automobile instrument panel, having excellent design quality. In addition, the laminate of the disclosure can be suitably used as, for example, an automobile interior material constituting an automobile interior part, such as an automobile instrument panel, having excellent design quality. Furthermore, the spray coating sol of the disclosure can be suitably used in, for example, forming a spray coating layer present on the surface of the surface skin of an automobile interior part such as an automobile instrument panel.

The vinyl chloride resin molded product having a spray coating layer of the disclosure can be obtained according to, for example, the method for manufacturing a vinyl chloride resin molded product having a spray coating layer of the disclosure.

(Spray coating sol)

The spray coating sol of the disclosure is characterized by containing acrylic-based fine particles (A) and a prescribed type of plasticizer (B). The spray coating sol of the disclosure may optionally further contain other components such as a solvent (C) and an additive, in addition to the components (A) and (B). Since the spray coating sol of the disclosure at least contains the prescribed components (A) and (B), excellent sol dispersibility, fluidity, and thermal stability can be simultaneously achieved. Accordingly, the spray coating sol of the disclosure can be precisely sprayed, for example, even in a fine textured pattern applied to a coating object, while dripping is suppressed, and is unlikely to cause coloring and so on by heating. As a result, the spray coating layer formed using the spray coating sol of the disclosure can express a uniform and precise pattern without being colored by heating and has excellent design quality. Accordingly, the spray coating layer can be used as an automobile interior material constituting an automobile interior part that requires high design quality.

The term "sol" in the disclosure indicates a liquid in a state in which the component is dispersed (partially including dissolution) under an environment of a temperature of 23°C and 1 atm.

<Acrylic-based fine particles (A)>

[Composition]

The acrylic-based fine particles (A) used in the spray coating sol of the disclosure are fine particles containing an acrylic-based resin having a (meth)acrylate-based monomer unit as a main constituting component. Here, the acrylic-based fine particles (A) contain the acrylic-based resin in an amount of preferably 50 mass% or more, more preferably 90 mass% or more, and further preferably 99 mass% or more. Although the acrylic-based resin constituting the acrylic-based fine particles (A) may further contain an additional monomer unit in addition to the (meth)acrylate-based monomer unit, the content of the (meth)acrylate-based monomer unit as the main constituting component is preferably 90 mass% or more, more preferably 95 mass% or more, and further preferably 99 mass% or more based on 100 mass% of all monomer units in the acrylic-based resin.

In the present specification, the term "(meth)acrylate" means acrylate and/or methacrylate.

In the present specification, the term "having a monomer unit" means that "a structural unit derived from a monomer is contained in the polymer obtained using the monomer."

[[Acrylic-based resin]]

-(Meth)acrylate-based monomer-

Here, examples of the (meth)acrylate-based monomer constituting the (meth)acrylate-based monomer unit include ester monomers of a monovalent chain alkyl alcohol and monovalent (meth)acrylic acid (chain alkyl (meth)acrylate monomer), such as methyl (meth)acrylate, ethyl (meth)acrylate, n-propyl (meth)acrylate, i-propyl (meth)acrylate, n-butyl (meth)acrylate, i-butyl (meth)acrylate, t-butyl (meth)acrylate, hexyl (meth)acrylate, 2-ethylhexyl (meth)acrylate, and octyl (meth)acrylate;

ester monomers of a monovalent cyclic alkyl alcohol and monovalent (meth)acrylic acid (cyclic alkyl (meth)acrylate monomer), such as cyclohexyl (meth)acrylate;

sulfonate group-containing (meth)acrylate-based monomers in which a sulfonate group, such as ally sulfonate, is introduced to (meth)acrylate;

phosphate group-containing (meth)acrylate-based monomers in which a phosphate group, such as 2-(meth)acryloyloxyethyl acid phosphate, is introduced to (meth)acrylate;

epoxy group-containing (meth)acrylate-based monomers in which an epoxy group is introduced to (meth)acrylate;

hydroxyl group-containing (meth)acrylate monomers, such as 2-hydroxyethyl (meth)acrylate and 2-hydroxypropyl (meth)acrylate;

carbonyl group-containing (meth)acrylate-based monomers prepared by introducing a carbonyl group to (meth)acrylate at a site other than the (meth)acryl moiety, such as acetoacetoxy ethyl (meth)acrylate;

amino group-containing (meth)acrylate-based monomers, such as N-dimethylaminoethyl (meth)acrylate and N-diethylaminoethyl (meth)acrylate; and

multifunctional (meth)acrylate-based monomers, such as ethylene glycol di(meth)acrylate, propylene glycol di(meth)acrylate, 1,6-hexanediol di(meth)acrylate, and trimethylolpropane tri(meth)acrylate [these multifunctional (meth)acrylate-based monomers may be copolymerized with other arbitrary (meth)acrylate-based monomers, as copolymerizable monomers (comonomers)].

These (meth)acrylate-based monomers may be used singly or in combinations of two or more.

In the present specification, the term "(meth)acryl" means acryl and/or methacryl.

Among the above-mentioned (meth)acrylate-based monomers, from the viewpoint of enhancing the thermal stability of the spray coating sol and suppressing coloring and so on by heating, the (meth)acrylate-based monomer constituting the (meth)acrylate-based monomer unit contained in the acrylic-based resin is preferably a chain alkyl (meth)acrylate monomer in which the alkyl group has 3 or less carbon atoms, more preferably a methyl (meth)acrylate monomer, and more preferably a methyl methacrylate monomer.

-Additional monomer-

Examples of the additional monomer constituting an additional monomer unit that can be further contained in the acrylic-based resin include acrylonitrile;

carboxyl group-containing monomers, such as methacrylic acid, acrylic acid, 2-succinoloyloxyethyl methacrylate-2-methacryloyloxyethyl succinate, 2-maleinoloyloxyethyl methacrylate-2-methacryloyloxyethyl maleate, 2-phthaloyloxyethyl methacrylate-2-methacryloyloxyethyl phthalate, and 2-hexahydrophthaloyloxyethyl methacrylate-2-methacryloyloxyethyl hexahydrophthalate; and

acrylamide-based monomers, such as acrylamide, diacetoneacrylamide, N-methylol acrylamide, N-methoxymethylacrylamide, N-ethoxymethylacrylamide, and N-butoxymethylacrylamide.

When the acrylic-based resin further has an additional monomer unit, the content proportion of the additional monomer unit is preferably 10 mass% or less, more preferably 5 mass% or less, and further preferably 1 mass% or less based on 100 mass% of all monomer units in the acrylic-based resin.

The acrylic-based resin may be a copolymer prepared by polymerization of the above-described (meth)acrylate-based monomer and a copolymer. Here, examples of the copolymer other than the above-mentioned copolymers include styrene and styrene derivatives, such as $\alpha$-methylstyrene, $\beta$-methylstyrene, o-methylstyrene, m-methylstyrene, p-methylstyrene, 2,4-dimethylstyrene, p-n-butylstyrene, p-tert-butylstyrene, p-n-hexylstyrene, p-n-octylstyrene, p-n-nonylstyrene, p-n-decylstyrene, p-n-dodecylstyrene, p-methoxystyrene, and p-phenylstyrene; multifunctional monomers, such as divinyl benzene, divinyl naphthalene, and divinyl ether; itaconic acid; crotonic acid; maleic acid and maleic acid derivatives, such as maleic acid ester and maleic anhydride; fumaric acid and fumaric acid derivatives, such as fumaric acid ester; and triaryl isocyanurate.

The above-described acrylic-based resin may be crosslinked or not crosslinked.

When the acrylic-based fine particles (A) have a core-shell structure described below, any of the core portion and/or the shell portion may contain the acrylic-based resin as the main component, and preferably at least the core portion contains the acrylic-based resin as the main component (50 mass% or more), and more preferably both the core portion and the shell portion contain the acrylic-based resin as the respective main components (50 mass% or more).

[Constitutional structure]

Although the constitutional structure of the acrylic-based fine particles (A) is not particularly limited, examples of the structure include a single structure in which the whole particle has a single constitutional structure; a multilayer structure having two or more constitutional structures, such as a core-shell structure; and a gradient structure in which the composition of a polymer particle is continuously changed from the center portion to the outer portion. Among these constitutional structures, the single structure and the multilayer structure are preferred, and in the case of a multilayer structure, a core-shell structure is more preferred.

[Average particle diameter]

The acrylic-based fine particles (A) preferably have an average particle diameter of 0.1 $\mu$m or more and preferably 30 $\mu$m or less and more preferably 20 $\mu$m or less. This is because if the average particle diameter of the acrylic-based fine particles (A) is not lower than the above lower limit, aggregation among extremely small acrylic-based fine particles (A) is prevented in preparation of a spray coating sol, and good sol dispersibility can be maintained. In addition, the above is because the acrylic-based fine particles (A) can be more easily handled. In addition, the above is because if the average particle diameter of the acrylic-based fine particles (A) is not higher than the above upper limit, the sol dispersibility of the spray coating sol and the surface smoothness after coating can be further improved, and a vinyl chloride resin molded product having a spray coating layer in which the spray coating layer has more excellent design quality can be obtained.

[Average degree of polymerization]

The acrylic-based fine particles (A) preferably have an average degree of polymerization of 2000 or more and more preferably 3000 or more, and preferably 100000 or less and more preferably 50000 or less. This is because if the average degree of polymerization of the acrylic-based fine particles (A) is not lower than the above lower limit, it is possible to obtain a spray coating sol having excellent thermal stability and fluidity that can suppress dripping during spray coating. In addition, the above is because if the average degree of polymerization of the acrylic-based fine particles (A) is not higher than the above upper limit, the heat resistance of the acrylic-based fine particles (A) is improved, and the coloring resistance of the spray coating layer formed using the spray coating sol is increased to further improve the design quality.

In the disclosure, the "average degree of polymerization" can be measured in accordance with JIS K6720-2.

When the acrylic-based fine particles (A) have a core-shell structure, as the average degree of polymerization of the acrylic-based fine particles (A), at least one of the core portion and the shell portion constituting the core-shell structure preferably satisfies the average degree of polymerization within the above-mentioned range.

<Plasticizer (B)>

The plasticizer (B) used in the spray coating sol of the disclosure needs to be of a prescribed type. If a prescribed type of plasticizer (B) is not used, the spray coating sol cannot show excellent sol dispersibility, thermal stability, and fluidity to well perform spray coating. As a result, the surface of the two-color molded product, for example, as an automobile interior material constituting an automobile interior part cannot be made into a spray coating layer having excellent design quality.

[Type]

Here, the plasticizer (B) needs to contain at least one selected from the group consisting of a benzoate-based plasticizer, a phthalate-based plasticizer, and a laurate-based plasticizer and can optionally further contain an additional plasticizer. In other words, the plasticizer (B) may contain the benzoate-based plasticizer only, the phthalate-based plasticizer only, or the laurate-based plasticizer only or may contain a mixture of these plasticizers and/or additional plasticizers at an arbitrary ratio.

Examples of the benzoate-based plasticizer include ethylene glycol dibenzoate, diethylene glycol dibenzoate, triethylene glycol dibenzoate, and dipropylene glycol dibenzoate.

Examples of the phthalate-based plasticizer include phthalates, such as dimethyl phthalate, diethyl phthalate, dibutyl phthalate, diisobutyl phthalate, diheptyl phthalate, di-n-octyl phthalate, di-(2-ethylhexyl) phthalate, di-n-nonyl phthalate, diisononyl phthalate, diisodecyl phthalate, diundecyl phthalate, ditridecyl phthalate, dibenzyl phthalate, butylbenzyl phthalate, dibutylbenzyl phthalate, diphenyl phthalate, dicyclohexyl phthalate, and epoxyhexahydrodiisodecyl phthalate;

isophthalates, such as dimethyl isophthalate, di-(2-ethylhexyl) isophthalate, and diisooctyl isophthalate;

tetrahydrophthalates, such as di-(2-ethylhexyl) tetrahydrophthalate, di-n-octyl tetrahydrophthalate, and diisodecyl tetrahydrophthalate; and

phthalic acid-based polyesters, such as an oligoester of phthalic acid and an alkylene glycol [the number of carbon atoms of the alkylene is 2 or more and 8 or less], a modified product in which an alkanol [the number of carbon atoms of the alkanol is 6 or more and 13 or less] is introduced to the terminal of the oligoester, a modified product in which an alkanoic acid [the number of carbon atoms of the alkanoic acid is 2 or more and 18 or less] is introduced to the terminal of the oligoester, and a modified product in which an alkenoic acid [the number of carbon atoms of the alkenoic acid is 2 or more and 18 or less] is introduced to the terminal of the oligoester.

Furthermore, examples of the laurate-based plasticizer include monoglycerin laurates, such as diethylene glycol monolaurate, glycerin monoacetomonolaurate, and glycerin diacetomonolaurate; and polyglycerin laurates.

Examples of the additional plasticizer include known plasticizers, for example, adipic acid-based plasticizers; azelaic acid-based plasticizers; sebacic acid-based plasticizers; maleic acid-based plasticizers; fumaric acid-based plasticizers; citric acid-based plasticizers; itaconic acid-based plasticizers; oleic acid-based plasticizers; ricinoleic acid-based plasticizers; stearic acid-based plasticizers; phosphoric acid-based plasticizers; succinic acid-based plasticizers; naphthalenedicarboxylic acid-based plasticizers; diphenyldicarboxylic acid-based plasticizers; trimellitic acid-based plasticizers such as a trimellitate; pyromellitic acid-based plasticizers such as a pyromellitate; other fatty acid-based plasticizers, such as chlorinated paraffin and pentaerythritol-fatty acid ester; other glycol-based plasticizers, such as diethylene glycol dipelargonate, triethylene glycol di-(2-ethylbutyrate), triethylene glycol dicaprylate, triethylene glycol di-(2-ethylhexoate), and dibutylmethylene bisthioglycolate; other epoxy-based plasticizers, such as butylepoxy stearate, epoxy triglyceride, epoxidized octyl oleate, and epoxidized decyl oleate; and glycerin-based plasticizers other than the plasticizers mentioned above as the laurate-based plasticizers, such as glycerin monoacetomonostearate, glycerin diacetomonooleate, and glycerin monoacetomonomontanate.

In the case of using an additional plasticizer, the content proportion of the additional plasticizer is preferably 10 mass% or less based on 100 mass% of all the plasticizers.

Among the above-mentioned plasticizers, the plasticizer (B) preferably contains the benzoate-based plasticizer and/or the laurate-based plasticizer and more preferably the benzoate-based plasticizer only, from the viewpoint of achieving good sol dispersibility.

[Content]

The content of the plasticizer (B) used in the spray coating sol is preferably 35 parts by mass or more, preferably 200 parts by mass or less, more preferably 120 parts by mass or less, and further preferably 80 parts by mass or less, based on 100 parts by mass of the acrylic-based fine particles (A). This is because if the content of the plasticizer (B) is not lower than the above lower limit, the spray coating sol can easily have good viscosity and high fluidity (i.e., the sol can be sufficiently prevented from solidifying), and the spray coating sol can be more precisely sprayed, for example, even in a fine textured pattern applied to a coating object. As a result, a spray coating layer having high design quality can be formed using the spray coating sol. In addition, the above is because if the content of the plasticizer (B) is not higher than the above upper limit, the spray coating sol can be imparted with adequate viscosity that can suppress dripping during spray coating, and a spray coating layer having high design quality can be formed.

<Other components>

The spray coating sol of the disclosure can optionally further contain other components, such as a solvent (C) and an additive, in addition to the above-described acrylic-based fine particles (A) and plasticizer (B).

[Solvent (C)]

The solvent (C) is not particularly limited, and examples thereof include known hydrocarbon-based solvents, alcohol-based solvents, ketone-based solvents, ester-based solvents, ether-based solvents, glycol-based solvents, glycol-based ester solvents, and glycol ether-based solvents. Among these solvents, the solvent (C) is preferably a glycol ester-based solvent, such as ethyl diglycol acetate and butyl diglycol acetate, and more preferably butyl diglycol acetate, from the viewpoint of maintaining good sol dispersibility and having a desired boiling point described below.

[[Boiling point]]

Here, the solvent (C) preferably has a boiling point at 1 atm of 200°C or more, more preferably 230°C or more, and preferably 300°C or less. This is because if the boiling point of the solvent (C) is not lower than the above lower limit, for example, when a mold is heated in formation of the vinyl chloride resin molded product having a spray coating layer of the disclosure, the design quality of the formed spray coating layer is prevented from being deteriorated due to generation of bubbles from the inside of the spray coating sol previously applied to the mold. In addition, the above is because if the boiling point of the solvent (C) is not higher than the above upper limit, a spray coating layer from which the solvent (C) is well removed can be more easily formed.

[[Content]]

The content of the solvent (C) in the spray coating sol is preferably higher than 0 parts by mass, more preferably 1 part by mass or more, further preferably 5 parts by mass or more, and particularly preferably higher than 25 parts by mass, and preferably 100 parts by mass or less, more preferably 45 parts by mass or less, and further preferably 35 parts by mass or less, based on 100 parts by mass of the acrylic-based fine particles (A). This is because if the solvent (C) is used together with the plasticizer (B) at a content of not lower than the above lower limit, the spray coating sol has good viscosity and high fluidity (i.e., the sol can be sufficiently prevented from solidifying), and can be more precisely sprayed, for example, even in a fine textured pattern applied to a coating object. As a result, a spray coating layer having higher design quality can be obtained more economically by using the spray coating sol. In addition, the above is because if the solvent (C) is used together with the plasticizer (B) at a content of not higher than the above upper limit, the spray coating sol is imparted with adequate viscosity that can suppress dripping during spray coating, and a spray coating layer having high design quality can be formed.

In particular, from the viewpoint of suppressing the solidification of the sol, the content, X (parts by mass), of the solvent (C) and the content, Y (parts by mass), of the plasticizer (B) in the spray coating sol preferably satisfy the relationship of the following expression (1):

$$Y > -0.4X + 50 \qquad (1)$$

where, Y is preferably 40 parts by mass or more. This is because if the contents of the plasticizer (B) and the solvent (C) satisfy the inequality relationship shown by the expression (1), a spray coating sol can be obtained more economically, while the solidification of the sol is sufficiently suppressed (i.e., while good sol dispersibility is maintained). As a result, a vinyl chloride resin molded product having a spray coating layer in which the spray coating layer is uniform and smooth and has more excellent design quality and a laminate including the molded product can be manufactured more economically.

[Additive]

The additives that can be optionally contained in the spray coating sol include a colorant. The colorant can be used to impart more desirable design quality to the surface of the vinyl chloride resin molded product having a spray coating layer and the surface of the laminate.

The colorant is not particularly limited, and a colorant that can provide a desired color to the surface of a two-color molded product, such as a vinyl chloride resin molded product having a spray coating layer, can be appropriately selected. Although the amount to be blended of the colorant to be added can also be appropriately selected, the amount to be blended of the colorant can be, for example, 0.1 parts by mass or more and 100 parts by mass or less based on 100 parts by mass of the acrylic-based fine particles (A), from the viewpoint of sufficiently providing a desired color to the surface of the two-color molded product while maintaining good dispersibility, viscosity, and thermal stability of the spray coating sol.

Examples of other additives include antifoaming agents, fungicides, deodorants, antibacterial agents, surfactants, lubricants, ultraviolet absorbers, and leveling agents. These additives may be appropriately blended.

<Viscosity>

The viscosity of the spray coating sol of the disclosure is preferably 2000 mPa·s or more, more preferably 3800 mPa·s or more, further preferably 4700 mPa·s or more, and even more preferably 7000 mPa·s or more, and preferably 50000 mPa·s or less and more preferably 30000 mPa·s or less. This is because if the viscosity is within the above range, the fluidity of the spray coating sol is further improved. Specifically, if the viscosity of the spray coating sol is not lower than the above lower limit, dripping during spray coating is more favorably suppressed to enhance the spray property, and a two-color molded product, such as a vinyl chloride resin molded product having a spray coating layer in which the spray coating layer is uniform and has higher design quality can be obtained. In addition, the above is because if the viscosity of the spray coating sol is not higher than the above upper limit, the sol can be precisely spray-coated, for example, even in a complex textured pattern applied to a coating object without solidifying, and therefore a two-color molded product, such as a vinyl chloride resin molded product having a spray coating layer in which the spray coating layer is fine and has higher design quality can be obtained.

<Method for preparation>

The spray coating sol of the disclosure can be prepared without being particularly limited by, for example, mixing and stirring the above-described acrylic-based fine particles (A), plasticizer (B), and other components to be optionally blended. The stirring conditions can be appropriately controlled, and the stirring can be performed, for example, under an environment of a temperature of 20°C to 80°C at a rotation speed of 10 to 10000 rpm for about 1 minute to 5 hours.

(Vinyl chloride resin molded product having a spray coating layer)

The vinyl chloride resin molded product having a spray coating layer of the disclosure is characterized by including a spray coating layer obtained by forming using the above-described spray coating sol and a vinyl chloride resin molded product prepared by forming a vinyl chloride resin composition. Since the vinyl chloride resin molded product having a spray coating layer of the disclosure includes a spray coating layer formed using the spray coating sol of the disclosure, it can be suitably used as, for example, an automobile interior material, such as a surface skin of an automobile interior part, e.g., an automobile instrument panel, having excellent design quality.

<Spray coating layer>

Here, the spray coating layer of the vinyl chloride resin molded product having a spray coating layer of the disclosure is formed by an arbitrary method using the above-described spray coating sol. The spray coating layer usually constitutes part or most of the outermost surface (on the side that can come in contact with the person who gets in a car) of a surface skin of an automobile interior part, such as an automobile instrument panel or a door trim, and imparts an ornamental value to the vinyl chloride resin molded product having a spray coating layer as a two-color molded product. Since the spray coating layer is, for example, formed using the spray coating sol of the disclosure, it is possible to reproduce a fine textured pattern or the like precisely and uniformly while achieving a desired color without causing coloring even when the layer is exposed to high temperature in a later step. As a result, the spray coating layer is suitably used as, for example, the surface layer of a surface skin of an automobile interior part, such as an automobile instrument panel, having excellent design quality.

<Vinyl chloride resin molded product>

The vinyl chloride resin molded product of the vinyl chloride resin molded product having a spray coating layer of the disclosure is a molded product prepared by forming a vinyl chloride resin composition and may further optionally contain an additive other than the vinyl chloride resin. Here, the vinyl chloride resin molded product constitutes, for example, a portion forming a basic structure of an automobile interior material constituting an automobile interior part, such as an automobile instrument panel surface skin or a door trim surface skin, and constitutes a portion showing basic performances (e.g., strength and flexibility). In addition, usually, in the automobile interior parts, such as an automobile instrument panel surface skin and a door trim surface skin, the vinyl chloride resin molded product is present on the inner side (the side that cannot usually be seen by the person who gets in a car) of the spray coating layer in the place where the spray coating layer is formed, and the vinyl chloride resin molded product is present on the outermost surface (on the side that can come in contact with the person who gets in a car) in the place where the spray coating layer is not formed.

[Vinyl chloride resin composition]

The vinyl chloride resin composition is a composition containing a vinyl chloride resin and is used in formation of a vinyl chloride resin molded product. In addition, the vinyl chloride resin composition may further contain an additive other than the vinyl chloride resin composition. The vinyl chloride resin composition may be in a powder form or in a liquid form, and is preferably in a powder form from the viewpoint of easiness of manufacturing.

The vinyl chloride resin contained in the vinyl chloride resin composition is a main component of the vinyl chloride resin molded product and allows the vinyl chloride resin molded product having a spray coating layer including the vinyl chloride resin molded product to show, for example, strength and flexibility.

Here, as the vinyl chloride resin, usually, vinyl chloride resin particles serving as the substrate constituting a vinyl chloride resin molded product are used. In addition, as a dusting agent for improving the powder fluidity of the vinyl chloride resin particles, it is preferred to further use vinyl chloride resin fine particles having a particle diameter different from that of the above-described vinyl chloride resin particles.

In the present specification, the term "resin particle" refers to a particle having a particle diameter not less than 30 $\mu$m, and the term "resin fine particle" refers to a particle having a particle diameter less than 30 $\mu$m.

[[Composition]]

Examples of the vinyl chloride resin include a homopolymer consisting of a vinyl chloride monomer unit; a vinyl chloride copolymer in which a vinyl chloride monomer and a comonomer of the vinyl chloride monomer are polymerized; and a vinyl chloride graft copolymer in which (1) vinyl chloride or (2) vinyl chloride and a comonomer mentioned above are graft-polymerized with a resin such as an ethylene-vinyl acetate copolymer, an ethylene-methyl methacrylate copolymer, an ethylene-ethyl acrylate copolymer, or a chlorinated polyethylene.

The vinyl chloride copolymer preferably contains the vinyl chloride monomer unit in an amount of 50 mass% or more, more preferably 70 mass% or more.

These vinyl chloride resins may be used singly or in combinations of two or more.

[[Characteristics]]

The vinyl chloride resin preferably has an average degree of polymerization of 800 or more and preferably 4000 or less, more preferably 3000 or less. This is because if the average degree of polymerization of the vinyl chloride resin is not lower than the above lower limit, the physical strength and flexibility of the resulting vinyl chloride resin molded product having a spray coating layer are improved. In addition, if the average degree of polymerization of the vinyl chloride resin is not higher than the above upper limit, the meltability of the vinyl chloride resin is enhanced, and therefore a lower forming temperature can be set even if, for example, the vinyl chloride resin molded product is formed through a heating process of powder slush molding. As a result, heat aging, such as coloring, of the spray coating sol previously applied to a coating object such as a mold is further suppressed, and a spray coating layer and a vinyl chloride resin molded product can be more favorably formed such that the vinyl chloride resin molded product overlaps the spray coating layer. That is, the above is because a vinyl chloride resin molded product having a spray coating layer having excellent design quality can be more easily obtained.

[[Additive]]

Examples of the additive that can be further contained in the vinyl chloride resin composition include plasticizers, stabilizers, release agents, surface modifiers, dusting agents other than the vinyl chloride resin fine particles, colorants, and other additives. In particular, from the viewpoint of imparting better flexibility to the automobile interior material constituting an automobile interior part, it is preferred to use the vinyl chloride resin together with a plasticizer in formation of the vinyl chloride resin molded product.

The plasticizer is not particularly limited, and known plasticizers such as various plasticizers mentioned as the plasticizer (B) to be used in the spray coating sol described above; epoxidized vegetable oils, such as epoxidized soybean oil and epoxidized linseed oil; chlorinated paraffin can be used.

These plasticizers may be used singly or in combinations of two or more at arbitrary ratios. Among the above-mentioned plasticizers, a trimellitate and/or a pyromellitate is preferably used, and a trimellitate is more preferably used, from the viewpoint of obtaining good flexibility.

The content of the plasticizer is, for example, preferably 70 parts by mass or more, more preferably 90 parts by mass or more, and further preferably 100 parts by mass or more, and preferably 200 parts by mass or less, based on 100 parts by mass of the vinyl chloride resin. This is because if the content of the plasticizer is not lower than the above lower limit, it is possible to impart better flexibility to the vinyl chloride resin molded product prepared by forming the vinyl chloride resin composition. In addition, the above is because if the content of the plasticizer is not higher than the above upper limit, the meltability of the vinyl chloride resin composition is further enhanced, and a lower formation temperature can be set in formation of the vinyl chloride resin molded product. As a result, the spray coating sol previously applied to a mold or the like can be further prevented from coloring and so on by heat.

Examples of the stabilizer include perchloric acid-treated (perchloric acid-introduced) hydrotalcite; zeolite; $\beta$-diketone; and fatty acid metal salts, such as zinc stearate.

Examples of the release agent include 12-hydroxystearic acid-based lubricants, such as 12-hydroxystearate and 12-hydroxystearic acid oligomer.

Examples of the surface modifier include known silicone oils that can be used together with a resin.

Examples of the dusting agent other than the vinyl chloride resin fine particles include inorganic fine particles, such as calcium carbonate, talc, and aluminum oxide; and organic fine particles, such as polyacrylonitrile resin fine particles, poly(meth)acrylate resin fine particles, polystyrene resin fine particles, polyethylene resin fine particles, polypropylene resin fine particles, polyester resin fine particles, and polyamide resin fine particles.

Examples of the colorant include quinacridone-based colorants, perylene-based colorants, condensed polyazo colorants, isoindolinone-based colorants, copper phthalocyanine-based colorants, titanium white-based colorants, and carbon black-based colorants. One or more colorants are used.

Examples of other additives include known impact modifiers, perchloric acid compounds other than perchloric acid-treated hydrotalcite (such as sodium perchlorate and potassium perchlorate), antioxidants, fungicides, flame retardants, antistatic agents, fillers, light stabilizers, and foaming agents.

The content of such an additive is not particularly limited and can be appropriately controlled.

[[Method for preparation]]

The vinyl chloride resin composition can be prepared by mixing the above-described components. The mixing method is not particularly limited, and examples thereof include a method in which the above-mentioned components are mixed by dry blending in an arbitrary order. Here, in the dry blending, a Henschel mixer is preferably used. In addition, the temperature during the dry blending is not particularly limited and is preferably 50°C or more, more preferably 70°C or more and preferably 200°C or less.

(Method for manufacturing vinyl chloride resin molded product having a spray coating layer)

The method for manufacturing the vinyl chloride resin molded product having a spray coating layer of the disclosure needs to include a prescribed step (a) and a prescribed step (b). Since the manufacturing method of the disclosure includes steps (a) and (b), the vinyl chloride resin molded product having a spray coating layer obtained according to the manufacturing method of the disclosure can have suppressed irregular color and coloring of the spray coating layer present on the surface and can show good design quality as a two-color molded product serving as an automobile interior material constituting an automobile interior part.

<Step (a)>

In step (a), a spray coating layer is formed using any of the above-described spray coating sols.

[Method for forming spray coating layer]

Here, in formation of a spray coating layer, for example, with the above-described spray coating sol, an arbitrary coating object is previously spray-coated. The applied spray coating sol is then cooled in the process of forming a vinyl chloride resin molded product described below to form a spray coating layer together with formation of a vinyl chloride resin molded product. As in the above-described method for forming, the spray coating layer and the vinyl chloride resin molded product can be formed with good close adherence by forming the spray coating sol by cooling, without drying immediately after spray coating, at the same time with the formation of the vinyl chloride resin molded product.

As the coating object, for example, glass or a metal having arbitrary shape and pattern according to need can be used. In particular, when the vinyl chloride resin molded product described below is formed by a powder slush molding method, the mold to be used in the powder slush molding can be directly used as the coating object. Each condition for spray coating of the spray coating sol can be appropriately controlled. For example, in order to form a spray coating layer having a thickness of 1 to 200 $\mu$m, the coating speed can be 1 to 60 sec/m$^2$.

[Thickness]

The thickness of the spray coating layer is not particularly limited and can be 10 $\mu$m or more from the viewpoint of sufficiently providing appearance decoration to the automobile interior material and can be 200 $\mu$m or less from the viewpoint of not inhibiting the basic performances, such as strength and flexibility, as an automobile interior material.

<Step (b)>

In step (b), a vinyl chloride resin molded product is formed using a vinyl chloride resin composition such that the spray coating layer formed in the above step (a) and the vinyl chloride resin molded product are in contact with each other. After step (b), usually, a vinyl chloride resin molded product having a spray coating layer in which the spray coating layer is positioned on the vinyl chloride molded product in close contact therewith is obtained.

[Method for forming vinyl chloride resin molded product]

The method for forming a vinyl chloride resin molded product is not particularly limited. The vinyl chloride resin molded product can be obtained through, for example, powder slush molding by heating and cooling the vinyl chloride resin composition obtained above.
Here, the vinyl chloride resin molded product may be formed alone separately from the above-described spray coating layer or may be formed directly on the previously molded spray coating layer. In particular, as described below, it is preferred to form the vinyl chloride resin molded product directly on the previously formed spray coating layer, from the viewpoint of more easily obtaining a vinyl chloride resin molded product having a spray coating layer. More specifically, the vinyl chloride resin molded product is preferably obtained by powder slush molding directly using the mold that is the coating object to which the spray coating sol is applied prior to formation of the vinyl chloride resin molded product. That is, it is preferred to form the vinyl chloride resin molded product by applying a vinyl chloride resin composition in a powder form onto a mold to which a spray coating sol is previously applied such that the applied spray coating sol and the vinyl chloride resin composition come into contact with each other and heating and cooling the mold.
Hereinafter, the case of using a mold for powder slush molding will be described as an example of formation of a spray coating layer unless otherwise specified. In addition, as an example of formation of a vinyl chloride resin molded product and a vinyl chloride resin molded product having a spray coating layer, the case of a powder slush molding method using directly the mold provided with the spray coating layer will be described.
The mold temperature in the powder slush molding is not particularly limited and is preferably 200°C or more and more preferably 230°C or more and preferably 300°C or less. This is because if the heating temperature of the mold is not lower than the above lower limit, the vinyl chloride resin composition is favorably molten, and a vinyl chloride resin molded product having excellent physical strength and flexibility can be easily formed. In addition, the above is because if the heating temperature of the mold is suppressed to be the above upper limit or less, the previously applied spray coating sol is further prevented from coloring and so on by heat, and a vinyl chloride resin molded product having a spray coating layer having more excellent design quality can be obtained.
The powder slush molding of the vinyl chloride resin molded product is not particularly limited and can be performed by, for example, the following method. That is, the above-described vinyl chloride resin composition is powdered onto a mold to which a spray coating sol is previously applied and which is then heated to the above-mentioned temperature range on the surface side where the applied spray coating sol is present, and the mold is left to stand while being heated for 5 to 30 seconds. The surplus vinyl chloride resin composition is shaken off from the mold, and the mold is further left to stand while being heated at an arbitrary temperature for 30 seconds to 3 minutes. After being left to stand while being heated, the mold is cooled to 10°C to 60°C to form a vinyl chloride resin molded product favorably adhering to the spray coating layer.

<Method for forming vinyl chloride resin molded product having a spray coating layer>

The vinyl chloride resin molded product having a spray coating layer can be directly obtained according to the above-described method for forming a vinyl chloride resin molded product, without particular limitation.
That is, the vinyl chloride resin molded product formed by cooling the mold as described above favorably adheres to the previously formed spray coating layer and therefore can be directly removed from the mold as a vinyl chloride resin molded product having a spray coating layer of the disclosure. The vinyl chloride resin molded product having a spray coating layer removed from the mold can be obtained as, for example, a sheet-like two-color molded product having a surface layer favorably shaped in the desired shape and textured pattern applied to the mold.

(Laminate)

The laminate of the disclosure is characterized by including a foamed polyurethane molded product and the above-described vinyl chloride resin molded product having a spray coating layer in which the vinyl chloride resin molded product of the vinyl chloride resin molded product having a spray coating layer is formed on the foamed polyurethane molded product. Since the laminate of the disclosure includes the vinyl chloride resin molded product having a spray coating layer in which the spray coating layer formed using the spray coating sol of the disclosure is present on the surface side, the surface has excellent reproducibility of color and pattern to show high design quality. Accordingly, the laminate of the disclosure can be suitably used as, for example, an automobile interior material constituting an automobile interior part, such as an automobile instrument panel or a door trim.
Here, the method for stacking is not particularly limited. For example, the following methods can be used. That is, (1) a method in which a foamed polyurethane molded product and a vinyl chloride resin molded product having a spray coating layer are separately provided, and the foamed polyurethane molded product and the vinyl chloride resin molded product having a spray coating layer are then bonded to each other by thermal fusion or thermal bonding, or with a known adhesive or the like such that the vinyl chloride resin molded product portion is positioned on the foamed polyurethane molded product; and (2) a method in which an isocyanate serving as a raw material of a foamed polyurethane molded product is reacted with, for example, a polyol to perform polymerization on the side of the vinyl chloride resin molded product of a vinyl chloride resin molded product having a spray coating layer, and the polyurethane is foamed by a known method to directly form (be lined with) a foamed polyurethane molded product such that the foamed polyurethane molded product is in contact with the side of the vinyl chloride resin molded product of the vinyl chloride resin molded product having a spray coating layer. In particular, the latter method (2) is suitable from the viewpoints that the process is simple and that even in the case of obtaining laminates in various shapes, the vinyl chloride resin molded product having a spray coating layer and the foamed polyurethane molded product easily firmly adhere to each other.

EXAMPLES

The disclosure will now be specifically described based on Examples, but the disclosure is not limited to the Examples. In the following description, "%" and "part(s)" representing amounts are based on mass unless otherwise specified.

The average particle diameter of acrylic-based fine particles (A), the average degrees of polymerization of acrylic-based fine particles (A) and a vinyl chloride resin, and the sol dispersibility, fluidity, and thermal stability of a spray coating sol were measured, observed, and evaluated by the following methods.

<Average particle diameter>

The average particle diameter (volume-average particle diameter ($\mu$m)) of acrylic-based fine particles (A) was measured in accordance with JIS Z8825. Specifically, acrylic-based fine particles (A) were dispersed in a water tank, and the diffraction and scattering intensity distribution of light was measured and analyzed with the apparatus shown below, and the particle diameters and particle diameter distribution based on volume were measured to calculate the average particle diameter.

Apparatus: laser diffraction particle size analyzer (manufactured by Shimadzu Corporation, SALD-2300)
System of measurement: laser diffraction and scattering
Range of measurement: 0.017 to 2500 $\mu$m
Light source: semiconductor laser (wavelength: 680 nm, output: 3 mW)

<Average degree of polymerization>

The average degrees of polymerization of acrylic-based fine particles (A) and a vinyl chloride resin were calculated by dissolving the acrylic-based fine particles (A) and the vinyl chloride resin, respectively, in cyclohexane and measuring the respective viscosities in accordance with JIS K6720-2.

<Sol dispersibility>

The sol dispersibility of a spray coating sol was visually evaluated. Specifically, approximately 10 cc of the resulting spray coating sol was thinly spread in a dish. Subsequently, the spray coating sol spread in the dish was visually observed, and the number of the observed aggregates was visually verified. The sol dispersibility of each spray coating sol was evaluated in accordance with the following criteria. The smaller number of verified aggregates means higher sol dispersibility of the spray coating sol:

Good: no aggregates were verified;
Fair: the number of verified aggregates was 1 or more and 9 or less; and
Poor: the number of verified aggregates was 10 or more.

<Fluidity>

The fluidity of a spray coating sol was evaluated by measuring the viscosity. Specifically, the viscosity ($\mu$Pa·s) of the spray coating sol was measured with a viscometer (manufactured by Toki Sangyo Co., Ltd., product name: "BM II," rotor: No. 4) at a rotation speed of 6 rpm under an atmosphere of a temperature of 23°C. When the viscosity is within the above-mentioned prescribed range, the spray coating sol has good fluidity.

<Thermal stability>

The thermal stability of a spray coating sol was visually evaluated. Specifically, the spray coating sol was applied to a SUS plate having a thickness of 4 mm so as to have a thickness of 30 μm. Subsequently, the SUS plate to which the spray coating sol was applied was heated under an environment of a temperature of 350°C for 300 seconds. The surface of the coating film of the spray coating sol after heating was visually observed to see whether coloring occurred or not. As less coloring is observed on the surface of the coating film of the spray coating sol after heating, as higher thermal stability the spray coating sol has.

(Example 1)

<Preparation of spray coating sol>

The blending components shown in Table 1-1 were stirred using a disper blade type stirrer under an environment of a temperature of 23°C at a rotation speed of 1000 rpm for 30 minutes to obtain a spray coating sol.
The resulting spray coating sol was subjected to measurement, observation, and evaluation of the sol dispersibility, fluidity, and thermal stability according to the above-described methods. The results are shown in Table 1-1.

<Formation of vinyl chloride resin molded product having a spray coating layer>

[Preparation of vinyl chloride resin composition]

Among the blending components shown in Table 2, the components excluding the plasticizers (trimellitate and epoxidized soybean oil) and the vinyl chloride resin fine particles serving as a dusting agent were mixed in a Henschel mixer. At the time when the temperature of the mixture reached 80°C, all the plasticizers were added to the mixture, and the temperature was further increased to dry up the mixture (a state in which the plasticizers are absorbed by the vinyl chloride resin particles of a vinyl chloride resin to make the mixture completely dry). Subsequently, the vinyl chloride resin fine particles serving as the dusting agent were added to the mixture at the time when the dried-up mixture was cooled to a temperature of 100°C or less to prepare a vinyl chloride resin composition.

[Formation of spray coating layer]

The spray coating sol obtained above was partially applied onto a textured mold for powder slush molding (such that there were an applied portion and a non-applied portion on the mold) so as to give a thickness of 30 μm.

[Formation of vinyl chloride resin molded product]

Subsequently, the textured mold provided with the spray coating layer as described above was heated to a temperature of 250°C. The vinyl chloride resin composition obtained above was powdered onto the surface of the heated textured mold on the side having the spray coating layer. The mold was left to stand for an arbitrary time of about 5 to 20 seconds after the powdering to melt the vinyl chloride resin composition on the spray coating layer formed on the mold. After melting of the vinyl chloride resin composition, the surplus vinyl chloride resin composition was shaken off. Subsequently, the textured mold onto which the vinyl chloride resin composition was powdered was left to stand in an oven set to a temperature of 200°C, and at the time when 60 seconds have elapsed since being left to stand, cooled with cooling water.

[Removal from the mold of vinyl chloride resin molded product having a spray coating layer]

At the time when the mold temperature was decreased to 40°C, a vinyl chloride resin molded product having a spray coating layer was removed from the mold as a two-color molded sheet, in which a spray coating layer having a thickness of 30 μm was partially formed on a vinyl chloride resin molded sheet of 200 mm × 150 mm × 1 mm.
It was confirmed that the spray coating layer of the resulting vinyl chloride resin molded product having a spray coating layer was formed uniformly in appearance, had no coloring, and had excellent design quality. In addition, in the resulting vinyl chloride resin molded product having a spray coating layer, it was confirmed in appearance that the vinyl chloride resin molded product and the spray coating layer formed on the vinyl chloride resin molded product well adhered to each other.

(Examples 2 to 3)

Spray coating sols, vinyl chloride resin compositions, and vinyl chloride resin molded products having a spray coating layer were manufactured as in Example 1 except that the blending components in the preparation of the spray coating sols were changed as shown in Table 1-1.
Measurement, observation, and evaluation were performed by the same methods as in Example 1. The results are shown in Table 1-1.

(Example 4)

In the preparation of the spray coating sol, the type of the plasticizer was changed from the benzoate-based plasticizer to a phthalate-based plasticizer. A spray coating sol, a vinyl chloride resin composition, and a vinyl chloride resin molded product having a spray coating layer were then manufactured as in Example 1 except that the blending components were changed as shown in Table 1-1.
Measurement, observation, and evaluation were performed by the same methods as in Example 1. The results are shown in Table 1-1.

(Example 5)

In the preparation of the spray coating sol, the type of the plasticizer was changed from the benzoate-based plasticizer to a laurate-based plasticizer. Spray coating sols, vinyl chloride resin compositions, and vinyl chloride resin molded products having a spray coating layer were manufactured as in Example 1 except that the blending components were changed as shown in Table 1-1.
Measurement, observation, and evaluation were performed by the same methods as in Example 1. The results are shown in Table 1-1.

(Examples 6 to 8)

In the preparation of the spray coating sols, a solvent was further used. The spray coating sols, vinyl chloride resin compositions, and vinyl chloride resin molded products having a spray coating layer were manufactured as in Example 1 except that the blending components were changed as shown in Table 1-1.
Measurement, observation, and evaluation were performed by the same methods as in Example 1. The results are shown in Table 1-1.

(Examples 9 to 13)

In the preparation of the spray coating sols, the type of the acrylic-based fine particles (A) was changed as shown in Table 1-1. The spray coating sols, vinyl chloride resin compositions, and vinyl chloride resin molded products having a spray coating layer were manufactured as in Example 1 except that the blending components were changed as shown in Table 1-1.
Measurement, observation, and evaluation were performed by the same methods as in Example 1. The results are shown in Table 1-1.

(Comparative Example 1)

In the preparation of the spray coating sol, the type of the plasticizer was changed from the benzoate-based plasticizer to a trimellitic acid-based plasticizer. The spray coating sol, vinyl chloride resin composition, and vinyl chloride resin molded product having a spray coating layer were manufactured as in Example 1 except that the blending components were changed as shown in Table 1-2.
Measurement, observation, and evaluation were performed by the same methods as in Example 1. The results are shown in Table 1-2.

(Comparative Examples 2 to 6)

In the preparation of the spray coating sols, the type of the acrylic-based fine particles (A) were changed as shown in Table 1-2. In addition, the type of the plasticizer was changed from the benzoate-based plasticizer to a trimellitic acid-based plasticizer. The spray coating sols, vinyl chloride resin compositions, and vinyl chloride resin molded products having a spray coating layer were manufactured as in Example 1 except that the blending components were changed as shown in Table 1-2.

Measurement, observation, and evaluation were performed by the same methods as in Example 1. The results are shown in Table 1-2.

(Comparative Examples 7 to 10)

In the preparation of the spray coating sols, a solvent was further used. The blending components were changed as shown in Table 1-2.

However, the mixtures of the blending components shown in Table 1-2 were solidified, and it was impossible to manufacture a spray coating sol and a vinyl chloride resin molded product having a spray coating layer. The results are shown in Table 1-2.

[Table 1-1]

| | | | Example 1 | Example 2 | Example 3 | Example 4 | Example 5 | Example 6 | Example 7 | Example 8 | Example 9 | Example 10 | Example 11 | Example 12 | Example 13 |
|---|---|---|---|---|---|---|---|---|---|---|---|---|---|---|---|
| Spray coating sol | Acrylic-based fine particles (A) | PMMA[1] [parts by mass] | 100 | 100 | 100 | 100 | 100 | 100 | 100 | 100 | - | - | - | - | - |
| | | Uncrosslinked PMMA[2] [parts by mass] | - | - | - | - | - | - | - | - | 100 | - | - | - | - |
| | | Crosslinked PMMA[3] [parts by mass] | - | - | - | - | - | - | - | - | - | 100 | - | - | - |
| | | PMMA[4] [parts by mass] | - | - | - | - | - | - | - | - | - | - | 100 | - | - |
| | | Epoxy group-containing PMMA[5] [parts by mass] | - | - | - | - | - | - | - | - | - | - | - | 100 | - |
| | | Core-shell structured PMMA[6] [parts by mass] | - | - | - | - | - | - | - | - | - | - | - | - | 100 |
| | Plasticizer (B) | Ethylene glycol dibenzoate[7] [parts by mass] | 100 | 70 | 50 | - | - | 50 | 50 | 40 | 70 | 70 | 70 | 70 | 70 |
| | | Phthalic acid-based polyester[8] [parts by mass] | - | - | - | 70 | - | - | - | - | - | - | - | - | - |
| | | Glycerin diacetomonolaurate[9] [parts by mass] | - | - | - | - | 70 | - | - | - | - | - | - | - | - |
| | | Trimellitate[10] [parts by mass] | - | - | - | - | - | - | - | - | - | - | - | - | - |
| | Solvent (C) | Butyl diglycol acetate[11] [parts by mass] | - | - | - | - | - | 10 | 20 | 30 | - | - | - | - | - |
| | Additive | Beige-based colorant[12] [parts by mass] | 60 | 60 | 60 | 60 | 60 | 60 | 60 | 60 | 60 | 60 | 60 | 60 | 60 |
| Evaluation item | | Sol dispersibility | Good | Good | Good | Fair | Fair | Good | Good | Good | Good | Good | Good | Good | Good |
| | | Fluidity (viscosity [mPa·s]) | 2800 | 5500 | 12000 | 6200 | 6500 | 9000 | 12000 | 18000 | 5800 | 5700 | 5000 | 5100 | 5200 |
| | | Thermal stability (a case having no coloring is indicated by "None," and a case having coloring is indicated by the "color" after coloring.) | None | None | None | None | None | None | None | None | None | None | None | None | None |

PMMA: Poly(methyl methacrylate)

[Table 1-2]

| | | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 |
|---|---|---|---|---|---|---|---|---|---|---|---|---|
| Spray coating sol | Acrylic-based fine particles (A) | PMMA[1] [parts by mass] | 100 | - | - | - | - | - | 100 | 100 | 100 | 100 |
| | | Uncrosslinked PMMA[2] [parts by mass] | - | 100 | - | - | - | - | - | - | - | - |
| | | Crosslinked PMMA[3] [parts by mass] | - | - | 100 | - | - | - | - | - | - | - |
| | | PMMA[4] [parts by mass] | - | - | - | 100 | - | - | - | - | - | - |
| | | Epoxy group-containing PMMA[5] [parts by mass] | - | - | - | - | 100 | - | - | - | - | - |
| | | Core-shell structured PMMA[6] [parts by mass] | - | - | - | - | - | 100 | - | - | - | - |
| | Plasticizer (B) | Ethylene glycol dibenzoate[7] [parts by mass] | - | - | - | - | - | - | 40 | 30 | 30 | 30 |
| | | Phthalic acid-based polyester[8] [parts by mass] | - | - | - | - | - | - | - | - | - | - |
| | | Glycerin diacetomonolaurate[9] [parts by mass] | - | - | - | - | - | - | - | - | - | - |
| | | Trimellitate[10] [parts by mass] | 70 | 70 | 70 | 70 | 70 | 70 | - | - | - | - |
| | Solvent (C) | Butyl diglycol acetate[11] [parts by mass] | - | - | - | - | - | - | 20 | 20 | 40 | 50 |
| | Additive | Beige-based colorant[12] [parts by mass] | 60 | 60 | 60 | 60 | 60 | 60 | 60 | 60 | 60 | 60 |
| Evaluation item | Sol dispersibility | | Poor | Poor | Poor | Poor | Poor | Poor | N/A | N/A | N/A | N/A |
| | Fluidity (viscosity [mPa·s]) | | 3200 | 4000 | 4300 | 3200 | 3200 | 3000 | Solidification | Solidification | Solidification | Solidification |
| | Thermal stability (a case having no coloring is indicated by "None," and a case having coloring is indicated by the "color" after coloring.) | | None | None | Yellow | Brown | None | None | N/A | N/A | N/A | N/A |

PMMA: Poly(methyl methacrylate)
N/A: Unmeasurable

EP 3 438 219 A1

1) Manufactured by Aica Kogyo Co., Ltd., product name: "ZEFIAC F320" (poly(methyl methacrylate), average degree of polymerization: 30000, average particle diameter: 2 μm)

2) Manufactured by Matsumoto Yushi-Seiyaku Co., Ltd., product name: "Matsumoto Microsphere (registered trademark) M-101" (uncrosslinked poly(methyl methacrylate), average particle diameter: 5 to 15 μm)

3) Manufactured by Matsumoto Yushi-Seiyaku Co., Ltd., product name: "Matsumoto Microsphere (registered trademark) M-201" (crosslinked poly(methyl methacrylate), average particle diameter: 1 to 7 μm)

4) Manufactured by Aica Kogyo Co., Ltd., product name: "ZEFIAC F325" (poly(methyl methacrylate), average degree of polymerization: 4000, average particle diameter: 1 μm)

5) Manufactured by Aica Kogyo Co., Ltd., product name: "ZEFIAC F301" (epoxy group-containing poly(methyl methacrylate), average particle diameter: 2 μm)

6) Manufactured by Aica Kogyo Co., Ltd., product name: "ZEFIAC F351" (core-shell structure/both the core portion and the shell portion are poly(methyl methacrylate), average particle diameter: 0.3 μm)

7) Manufactured by DIC Corporation, product name: "Monocizer PB-10"

8) Manufactured by DIC Corporation, product name: "Polycizer W-23-S"

9) Manufactured by Riken Vitamin Co., Ltd., product name: "Rikemal PL-012"

10) Manufactured by Kao Corporation, product name: "Trimex N-08"

11) Manufactured by Daicel Corporation, product name: "Butyl Diglycol Acetate," boiling point at 1 atm: 246.8°C to 247°C

12) Manufactured by Toyo Ink Co., Ltd., product name: "AT3G423-BE"

[Table 2]

| | | | |
|---|---|---|---|
| Vinyl chloride resin composition | Substrate | Vinyl chloride resin particles[13] [parts by mass] | 100 |
| | Plasticizer | Trimellitate[14] [parts by mass] | 135 |
| | | Epoxidized soybean oil[15] [parts by mass] | 5 |
| | Stabilizer | Perchloric acid-introduced hydrotalcite[16] [parts by mass] | 5 |
| | | Zeolite[17] [parts by mass] | 3 |
| | | β-Diketone[18] [parts by mass] | 0.5 |
| | | Zinc stearate[19] [parts by mass] | 0.5 |
| | Release agent | 12-Hydroxystearic acid[20] [parts by mass] | 1 |
| | Dusting agent | Vinyl chloride resin fine particles[21] [parts by mass] | 15 |
| | Colorant | Carbon black-based pigment[22] [parts by mass] | 3 |
| | Other additives | Phosphite-based antioxidant[23] [parts by mass] | 1 |
| | | Hindered amine light stabilizer[24] [parts by mass] | 0.5 |

13) Manufactured by Shin Dai-ichi Vinyl Corporation, product name: "ZEST (registered trademark) 2500Z" (average degree of polymerization: 2500, average particle diameter: 140 μm)

14) Manufactured by Kao Corporation, product name: "Trimex N-08"

15) Manufactured by ADEKA Corporation, product name: "ADK CIZER O-130S"

16) Manufactured by Kyowa Chemical Industry Co., Ltd., product name: "Alcamizer 5"

17) Manufactured by Mizusawa Industrial Chemicals, Ltd., product name: "MIZUKALIZER DS"

18) Manufactured by Showa Denko K.K., product name: "Karenz DK-1"

19) Manufactured by Sakai Chemical Industry Co., Ltd., product name: "SAKAI SZ2000"

20) Manufactured by ADEKA Corporation, product name: "ADK STAB LS-12"

21) Manufactured by Shin Dai-ichi Vinyl Corporation, product name: "ZEST (registered trademark) PQLTX" (average degree of polymerization: 800, average particle diameter: 1.8 μm)

22) Manufactured by Dainichiseika Color and Chemicals Mfg. Co., Ltd., product name: "DA PX 1720 (A) black"

23) Manufactured by ADEKA Corporation, product name: "ADK STAB 1500"

24) Manufactured by BASF SE, product name: "TINUVIN (registered trademark) 770DF"

Table 1-1 demonstrates that the spray coating sols of Examples 1 to 13 each containing acrylic-based fine particles (A) and a prescribed plasticizer (B) can simultaneously achieve excellent sol dispersibility, fluidity, and thermal stability.

In contrast, as shown in Table 1-2, in Comparative Examples 1 to 6 using only a plasticizer whose type is different from that of the prescribed plasticizer (B), the sol dispersibility of the spray coating sols was generally deteriorated. In particular, in Comparative Examples 3 and 4, the spray coating sols were colored by heating, and thermal stability was also inferior. In Comparative Examples 7 to 10 not having sol shapes, evaluation for a spray coating sol could not be performed.

INDUSTRIAL APPLICABILITY

According to the disclosure, it is possible to provide a spray coating sol having excellent sol dispersibility, fluidity, and thermal stability that can be used in formation of a spray coating layer of an automobile interior material.

In addition, according to the disclosure, it is possible to provide a vinyl chloride resin molded product having a spray coating layer in which the spray coating layer is formed using the spray coating sol, a method for manufacturing the same, and a laminate including the vinyl chloride resin molded product having a spray coating layer.

**Claims**

1. A spray coating sol for forming a spray coating layer of an automobile interior material, the spray coating sol comprising acrylic-based fine particles (A) and a plasticizer (B), wherein
   the plasticizer (B) contains at least one selected from the group consisting of a benzoate-based plasticizer, a phthalate-based plasticizer, and a laurate-based plasticizer.

2. The spray coating sol according to claim 1, having a viscosity of 2000 mPa·s or more and 50000 mPa·s or less.

3. The spray coating sol according to claim 1 or 2, further comprising a solvent (C), wherein
   the solvent (C) has a boiling point of 200°C or more.

4. The spray coating sol according to any one of claims 1 to 3, wherein the acrylic-based fine particles (A) have an average particle diameter of 30 $\mu$m or less.

5. A vinyl chloride resin molded product having a spray coating layer, comprising:

   a vinyl chloride resin molded product prepared by forming a vinyl chloride resin composition; and
   a spray coating layer formed using a spray coating sol according to any one of claims 1 to 4 on the vinyl chloride resin molded product.

6. A laminate comprising:

   a foamed polyurethane molded product; and
   a vinyl chloride resin molded product having a spray coating layer according to claim 5, wherein
   the vinyl chloride resin molded product of the vinyl chloride resin molded product having a spray coating layer is formed on the foamed polyurethane molded product.

7. A method for manufacturing a vinyl chloride resin molded product having a spray coating layer, the method comprising:

   step (a) of forming a spray coating layer using a spray coating sol according to any one of claims 1 to 4; and
   step (b) of forming a vinyl chloride resin molded product using a vinyl chloride resin composition such that the spray coating layer and the vinyl chloride resin molded product are in contact with each other.

## INTERNATIONAL SEARCH REPORT

| International application No. |
| --- |
| PCT/JP2017/011812 |

A. CLASSIFICATION OF SUBJECT MATTER
*C09D133/00*(2006.01)i, *B29C41/20*(2006.01)i, *B32B27/30*(2006.01)i, *C08J7/04*(2006.01)i, *C09D7/12*(2006.01)i

According to International Patent Classification (IPC) or to both national classification and IPC

B. FIELDS SEARCHED

Minimum documentation searched (classification system followed by classification symbols)
C09D133/00, B29C41/20, B32B27/30, C08J7/04, C09D7/12

Documentation searched other than minimum documentation to the extent that such documents are included in the fields searched
Jitsuyo Shinan Koho        1922–1996    Jitsuyo Shinan Toroku Koho    1996–2017
Kokai Jitsuyo Shinan Koho  1971–2017    Toroku Jitsuyo Shinan Koho    1994–2017

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y | JP 2007-238711 A  (Mitsubishi Rayon Co., Ltd.),<br>20 September 2007 (20.09.2007),<br>claims 1 to 2; paragraphs [0002], [0009] to [0063]; examples<br>(Family: none) | 1-4<br>5-7 |
| X<br>Y | WO 2002/094940 A1  (Mitsubishi Rayon Co., Ltd.),<br>28 November 2002 (28.11.2002),<br>claims 1 to 9; pages 3 to 15; examples<br>& US 2004/0053065 A1    & EP 1400572 A1<br>& CN 1386781 A          & JP 4077323 B2 | 1-4<br>5-7 |

| [×] | Further documents are listed in the continuation of Box C. | | [ ] | See patent family annex. |
| --- | --- | --- | --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered   to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 02 May 2017 (02.05.17) | 16 May 2017 (16.05.17) |

| Name and mailing address of the ISA/<br>Japan Patent Office<br>3-4-3,Kasumigaseki,Chiyoda-ku,<br>Tokyo 100-8915,Japan | Authorized officer<br><br>Telephone No. |
| --- | --- |

Form PCT/ISA/210 (second sheet) (January 2015)

<div align="center">

**INTERNATIONAL SEARCH REPORT**

</div>

| | International application No. |
|---|---|
| | PCT/JP2017/011812 |

C (Continuation).   DOCUMENTS CONSIDERED TO BE RELEVANT

| Category* | Citation of document, with indication, where appropriate, of the relevant passages | Relevant to claim No. |
|---|---|---|
| X<br>Y | JP 11-217479 A  (Dainippon Ink and Chemicals, Inc.),<br>10 August 1999 (10.08.1999),<br>claims 1 to 6; paragraphs [0001] to [0035]; examples<br>(Family: none) | 1-4<br>5-7 |
| X<br>Y | JP 10-231409 A  (Dainippon Ink and Chemicals, Inc.),<br>02 September 1998 (02.09.1998),<br>claims 1 to 6; paragraphs [0001] to [0027]; examples<br>(Family: none) | 1-4<br>5-7 |
| Y | WO 2010/098198 A1  (Nakata Coating Co., Ltd.),<br>02 September 2010 (02.09.2010),<br>claims 1 to 13; paragraphs [0002] to [0006], [0039] to [0044], [0062]<br>& US 2011/0316184 A1   & EP 2402136 A1<br>& KR 10-2011-0110251 A  & CN 102292203 A<br>& JP 4912507 B2 | 5-7 |
| Y | JP 7-268207 A  (Zeon Kasei Co., Ltd.),<br>17 October 1995 (17.10.1995),<br>claims 1 to 3; paragraphs [0002], [0004]<br>(Family: none) | 5-7 |
| A | JP 2006-299195 A  (Mitsubishi Rayon Co., Ltd.),<br>02 November 2006 (02.11.2006),<br>entire text<br>(Family: none) | 1-7 |
| A | JP 2008-260956 A  (Riken Technos Corp.),<br>30 October 2008 (30.10.2008),<br>entire text<br>(Family: none) | 1-7 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4912507 B